# EUROPÄISCHE PATENTSCHRIFT

(11) **EP 2 312 261 B1**
(45) Veröffentlichungstag und Bekanntmachung des Hinweises auf die Patenterteilung: **24.07.2013**
(21) Anmeldenummer: 10186364.5
(22) Anmeldetag: 04.10.2010
(51) Int. Cl.: G01B 3/30, G01B 21/04

(54) **Vorrichtung zur Überprüfung der Genauigkeit von Werkzeugmaschinen und Messeinrichtungen**
Device for monitoring the precision of machine tools and measuring devices
Dispositif de vérification de l'exactitude de machines-outils et dispositifs de mesure

(30) Priorität: 09.10.2009 DE 102009045515
(43) Veröffentlichungstag der Anmeldung: 20.04.2011
(73) Patentinhaber: Dreier Lasermesstechnik GmbH, 72160 Horb (DE)
(72) Erfinder: Dreier, Horst, 72160 Horb am Neckar (DE)
(74) Vertreter: Dreiss

(56) Entgegenhaltungen:
- EP-A1- 1 189 020
- DE-A1-102006 014 509
- DE-U1- 20 000 469
- DE-U1-202005 005 574
- US-A- 5 983 512
- US-A1- 2001 045 021
- Anonymous: "Zustand einer CNC-Werkzeugmaschine nach einem Crash schnell überprüfen"[Online] 4. August 2003 (2003-08-04), XP002609579 MAV Gefunden im Internet: URL:http://www.mav-online.de/automation/-/ article/46701/26052786/maximized/> [gefunden am 2010-11-15]

## Beschreibung

Die Erfindung betrifft eine Vorrichtung zur Überprüfung der Genauigkeit von Werkzeugmaschinen und Messeinrichtungen, mit einem Träger und wenigstens einem auf den Träger aufgeklebten Referenzelement.

Bei einer bekannten Vorrichtung (Fa. Dreier Lasermesstechnik GmbH, Horb am Neckar, mit der Bezeichnung "Quickmaster") zum Überprüfen der Genauigkeit von Werkzeugmaschinen und Messeinrichtungen, insbesondere zum Überprüfen der Genauigkeit der Verfahrwege und der Positionierung von Werkzeugen und Abtastmitteln, wird ein Steinquader verwendet, der mehrere exakt positionierte Bohrungen aufweist. Diese Bohrungen sind mit hülsenförmigen Einsätzen, insbesondere Bundbuchsen versehen, die in die Bohrungen eingeklebt sind. Nach dem Einkleben werden diese Buchsen, insbesondere deren Innenoberfläche, mit einer hochgenauen Koordinatenschleifmaschine geschliffen und auf ein gewünschtes Maß gebracht. Mit einer derartigen Überprüfungsvorrichtung kann kurzfristig und schnell eine genaue Aussage über den Zustand einer CNC-Werkzeugmaschine, insbesondere über die Genauigkeit und Nullpunktseinstellung der Maschine getroffen werden. Dies ist insbesondere dann wichtig, wenn hochgenaue Teile gefertigt werden müssen, regelmäßig an der Werkzeugmaschine Kurztests durchgeführt werden müssen oder wenn nach einem Maschinencrash die Genauigkeit der Maschine überprüft werden muss. Speziell nach einem Maschinencrash ist es besonders wichtig zu wissen, ob sich die Maschine im Bezug auf Geometrie und Positionierung verändert hat. Mit Hilfe der bekannten Vorrichtung ist es möglich, kurzfristig und schnell eine genaue Aussage über den Zustand der Maschine zu treffen. Hierdurch können Servicekosten eingespart, Maschinenstillstandszeiten und Produktionsausfallzeiten verringert und Produktionskosten reduziert werden und es fallen keine Versicherungsprämien an, da weniger Versicherungsleistungen in Anspruch genommen werden müssen. Mit der bekannten Überprüfungsvorrichtung kann die Ebenheit, Parallelität und Winkelgenauigkeit gemessen werden, wobei die Toleranzen im Bereich von 2 µm liegen.

Es hat sich gezeigt, dass die bekannte Überprüfungsvorrichtung temperaturempfindlich ist und dass sich bei größeren Temperaturschwankungen Risse im Träger bilden. Diese Risse sind dadurch entstanden, dass sich die eingeklebten Buchsen bei Erwärmung mehr ausgedehnt haben, als der diese Buchsen umgebende Träger, in welchen sie eingeklebt sind. Dies kann zum Beispiel dadurch entstehen, dass eine derartige Überprüfungsvorrichtung im Auto liegt und nicht ausreichend gegen Erwärmung durch Sonneneinstrahlung geschützt wird. Ein weiterer Nachteil wird darin gesehen, dass der Fertigungsaufwand einer derartigen Überprüfungsvorrichtung relativ hoch ist, da zunächst in den Träger hochgenaue Bohrungen eingebracht werden müssen, in welchen dann die Buchsen eingeklebt werden, die dann wiederum feinstgeschliffen werden müssen.

Die EP 1 189 020 A1 offenbart einen Messwürfel mit in Aufnahmebohrungen eingesteckten Referenzelementen. Die US 5,983,512 A zeigt eine Messplatte mit drei parallelen Ebenen mit zueinander koaxialen Bohrungen.

Die US 2001/0045021 A1 und die DE 10 2006 014 509 A1 schlagen vor, die Referenzelemente auf den Träger aufzukleben. Hierdurch wird der Herstellungsaufwand zwar verringert, die Messgenauigkeit aber nicht erhöht.

Der Erfindung liegt daher die Aufgabe zugrunde, eine Überprüfungsvorrichtung bereitzustellen, die nicht nur preiswerter und schneller hergestellt werden kann sondern mit der auch Fehler der Elektronik und/oder der CNC-Steuerung der Werkzeugmaschine leichter ermittelt werden können.

Diese Aufgabe wird mit einer Vorrichtung gelöst, die die Merkmale des Anspruchs 1 aufweist.

Durch das Aufkleben des oder der Referenzelemente auf den Träger wird der wesentliche Vorteil erzielt, dass in den Träger keine Aufnahmebohrungen für die Referenzelemente gebohrt werden müssen, so dass diese Bearbeitungszeit eingespart wird. Außerdem können die Referenzelemente leichter auf den Träger aufgeklebt werden, als in eine zuvor gefertigte Bohrung eingesetzt. Ein weiterer Vorteil wird darin gesehen, dass die erfindungsgemäße Überprüfungsvorrichtung wesentlich unempfindlicher gegen Temperaturschwankungen ist als die bekannte Vorrichtung, da Träger und Referenzelement nicht mit enger Passung ineinander geschachtelt sind, sondern nur aneinander liegen und somit Differenzen in der Ausdehnung bei unterschiedlichen Temperaturen möglich sind, ohne dass die Bauteile beschädigt werden. Ein weiterer Vorteil wird weiterhin darin gesehen, dass die Referenzelemente in großen Stückzahlen und mit der erforderlichen Genauigkeit hergestellt werden können und anschließend ohne jede weitere Nacharbeit am Träger befestigt werden. Bei der bekannten Vorrichtung muss jedes Referenzelement nach dem Einkleben in die Aufnahmebohrung im Träger feinstgeschliffen werden. Es können außerdem eine große Anzahl von Trägern hergestellt werden und die Referenzelemente können nach Kundenwunsch an den unterschiedlichsten Positionen am Träger befestigt werden, sogar an verschiedenen Ebenen und Oberflächen. Außerdem kann die Anzahl der am Träger befestigten Referenzelemente nach Kundenwunsch bestimmt werden. Die erfindungsgemäße Überprüfungsvorrichtung kann also in kürzester Zeit individuell hergestellt werden und ist wesentlich robuster.

Erfindungsgemäß sind mehrere Referenzelemente vorgesehen, die in unterschiedlichen Abständen zu Längen- und/oder Breitenlinien oder Rasterlinien auf dem Träger angeordnet sind. Da kein exaktes Positioniermaß eingehalten wird, wird hierdurch der Vorteil erzielt, dass nicht nur die Positionierung einfacher erfolgen kann, sondern dadurch auch die Fehler der Elektronik und/oder der CNC-Steuerung der Werkzeugmaschine leichter ermittelt werden können. Dabei können die Referenzelemente durchaus in einem vorgegebenen Maß versetzt zueinander angeordnet sein. Um die genaue Position der Referenzelemente zu ermitteln, wird deren Position auf einer Messmaschine ermittelt und protokolliert. Die Messprotokolle können als Kalibrierzertifikat verwendet werden.

Dabei weist wenigstens ein Referenzelement eine kreiszylinderförmige Innenoberfläche auf. Zudem besitzt das Referenzelement einen kegelstumpfförmigen und/oder einen kreiszylinderförmigen äußeren Oberflächenabschnitt. Dabei verjüngt sich der Außendurchmesser des Referenzelements mit zunehmendem Abstand zum Träger. Das auf den Träger aufgeklebte Referenzelement besitzt demnach nicht nur eine einzige Referenzoberfläche, nämlich die Innenoberfläche wie beim Stand der Technik, sondern auch eine als Referenz dienende Außenoberfläche. Diese Außenoberfläche muss nicht parallel zur Innenoberfläche verlaufen, so dass hierdurch auch Winkel abgegriffen werden können.

Vorzugsweise ist der Träger als rechteckförmige Platte oder Würfel ausgebildet, wobei jedoch auch kreisrunde Scheiben oder andere Geometrien möglich sind.

Vorzugsweise besteht der Träger aus Stein, insbesondere aus Granit, wie Afrikanischer Granit, der relativ unempfindlich auf Temperaturschwankungen reagiert und hochgenau gefertigt werden kann.

Mit Vorzug besteht das Referenzelement aus Metall, insbesondere aus Titan oder einer Titanlegierung. Titan und Titanlegierungen besitzen den Vorteil, dass sie einen Wärmeausdehnungskoeffizienten besitzen, der gleich oder nahezu gleich ist, wie der des Granits. Außerdem können Titan und Titanlegierungen einfach, schnell und hochgenau bearbeitet werden.

Bevorzugte Ausführungsformen sehen vor, dass das Referenzelement als Hülse, Kugel, Würfel oder als Halbkugel ausgebildeten ist. Diese geometrisch einfache Formen können optimal hergestellt und abgetastet werden.

Mit Vorzug ist das den größeren Außendurchmesser aufweisende Ende des Referenzelements am Träger angeklebt. Hierdurch wird eine große Klebefläche und dadurch eine hohe Sicherheit gegen Positionsveränderungen des Referenzelements gegenüber dem Träger geschaffen.

Eine Weiterbildung sieht vor, dass zur Verklebung der Referenzelemente mit dem Träger ein Haftvermittler verwendet wird, der einen Wärmeausdehnungskoeffizienten aufweist, der dem des Trägers und/oder des Referenzelements entspricht. Hierdurch werden Differenzen in der Ausdehnung bei unterschiedlichen Temperaturen auf ein Minimum reduziert. Der Haftvermittler ist jedoch noch so elastisch, dass er die Ausdehnungsdifferenzen aufnimmt und die Referenzelemente mit Sicherheit am Träger festhält.

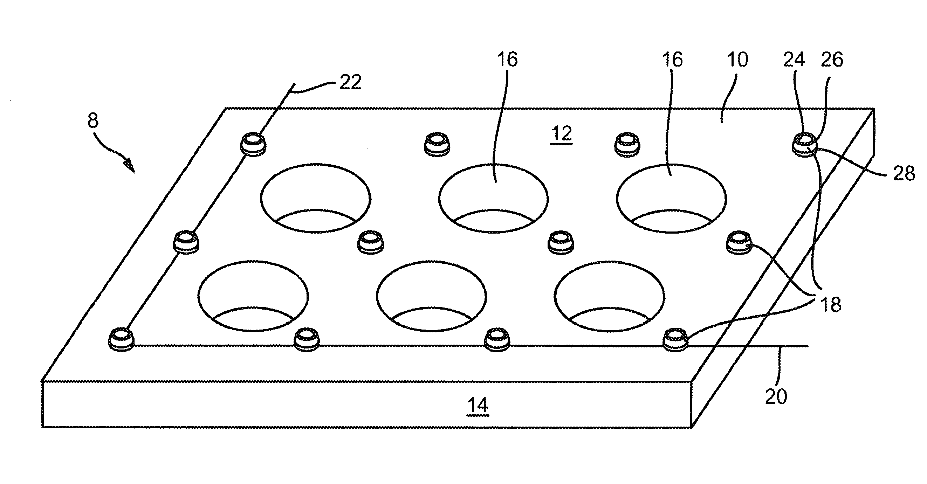

Weitere Vorteile, Merkmale und Einzelheiten der Erfindung ergeben sich aus den abhängigen Ansprüchen und der nachfolgenden Beschreibung, in der unter Bezugnahme auf die Zeichnung ein besonders bevorzugtes Ausführungsbeispiel beschrieben ist. Dabei können die in der Zeichnung dargestellten und in der Beschreibung und Ansprüchen erwähnten Merkmale jeweils einzeln für sich oder in beliebiger Kombination erfindungswesentlich sein.

Die Zeichnung zeigt eine perspektivische Ansicht des Ausführungsbeispiels der erfindungsgemäßen Überprüfungsvorrichtung 8. Mit dem Bezugszeichen 10 ist ein aus Granit, insbesondere aus Afrikanischem Granit, bestehender Träger bezeichnet, der eine rechteckförmige Gestalt besitzt und als Platte ausgebildet ist. Die der Oberseite 12 gegenüberliegende Unterseite wird auf ein (nicht dargestelltes) Maschinenbett einer Werkzeugmaschine aufgelegt oder in Bezug zu einer Messeinrichtung gebracht. Selbstverständlich kann der Träger 10 auch auf eine seiner Seitenflächen 14 gestellt werden.

Der Träger 10 wird von Bohrungen 16 durchsetzt, wodurch das Gewicht des Trägers reduziert wird. Auf der Oberseite 12 des Trägers 10 sind insgesamt zwölf Referenzelemente 18 mittels eines Haftvermittlers angeklebt. Mit den Bezugszeichen 20 und 22 sind eine Längenlinie und eine Breitenlinie eines Rasters bezeichnet, wobei die in der Längenlinie 20 und in der Breitenlinie 22 angeordneten Referenzelemente 18 nicht exakt auf diesen Linien 20 und 22 liegen, sondern einen geringfügigen Versatz zu diesen aufweisen. Hierdurch können Fehler in der Elektronik und der CNC-Steuerung, zum Beispiel Rundungsfehler, Summenfehler und so weiter ermittelt werden, da jeweils andere x- und y-Werte für deren Position ermittelt werden müssen.

Beim gezeigten Ausführungsbeispiel sind die Referenzelemente 18 gleich ausgestaltet, wobei aber auch unterschiedlich geformte Referenzelemente am Träger 10 und Referenzelemente mit unterschiedlichen Größen befestigt sein können. Jedes Referenzelement 18 ist hülsenförmig ausgestaltet und weist eine Innenoberfläche 24 auf, die kreiszylinderförmig ist. Die Außenseite wird von einem kegelstumpfförmigen äußeren Oberflächenabschnitt 26 und einem kreiszylinderförmigen äußeren Oberflächenabschnitt 28 gebildet. Dabei liegt der kreiszylinderförmige äußere Oberflächenabschnitt 28 an der Oberseite 12 des Trägers 10 an und der kegelstumpfförmige äußere Oberflächenabschnitt 26 verjüngt sich mit zunehmendem Abstand von der Oberseite 12.

Die Referenzelemente 18 können in unterschiedlicher Anzahl und an beliebigen Positionen am Träger 10 angeklebt sein. Dabei können auch Referenzelemente 18 an einer oder mehreren der Seitenflächen 14 angeklebt sein.

Eine derartige Vorrichtung 8 kann deshalb, weil sowohl der Träger 10 als auch die Referenzelemente 18 in beliebiger Anzahl vorbereitet werden können, innerhalb kürzester Zeit auf Kundenwunsch hergestellt werden. Da der Träger 10 und die Referenzelemente 18 nicht geschachtelt werden, besteht keine Gefahr der Beschädigung des Trägers 10 oder der Referenzelemente 18 durch unterschiedliche Wärmeausdehnungen.

## Patentansprüche

1. Vorrichtung (8) zur Überprüfung der Genauigkeit von Werkzeugmaschinen und Messeinrichtungen, mit einem Träger (10) und wenigstens mehreren auf die Oberfläche des Trägers (10) aufgeklebten Referenzelementen (18), wobei der Träger (10) ein Längenlinien (20) und Breitenlinien (22) aufweisendes Raster besitzt, **dadurch gekennzeichnet, dass** die Referenzelemente (18) in unterschiedlichen Abständen zu Längenlinien (20) und/oder Breitenlinien (22) auf dem Träger (10) angeordnet sind, indem die in der Längenlinie (20) und in der Breitenlinie (22) angeordneten Referenzelemente (18) nicht exakt auf diesen Linien (20, 22) liegen, sondern einen geringfügigen Versatz zu diesen aufweisen, und die Referenzelemente (18) jeweils eine Innenoberfläche (24) aufweisen, die kreiszylinderförmig ist oder einen polygonfömigen Querschnitt aufweist.

2. Vorrichtung nach Anspruch 1, **dadurch gekennzeichnet, dass** der Träger (10) als rechteckförmige Platte oder Würfel ausgebildet ist.

3. Vorrichtung nach einem der vorhergehenden Ansprüche, **dadurch gekennzeichnet, dass** der Träger (10) aus Stein, insbesondere aus Granit, besteht.

4. Vorrichtung nach einem der vorhergehenden Ansprüche, **dadurch gekennzeichnet, dass** das Referenzelement (18) aus Metall, insbesondere aus Titan oder einer Titanlegierung, besteht.

5. Vorrichtung nach einem der vorhergehenden Ansprüche, **dadurch gekennzeichnet, dass** das Referenzelement (18) als Hülse, Kugel, Würfel oder als Halbkugel ausgebildeten ist.

6. Vorrichtung nach einem der vorhergehenden Ansprüche, **dadurch gekennzeichnet, dass** das Referenzelement (18) einen kegelstumpfförmigen äußeren Oberflächenabschnitt (26) und/oder einen kreiszylinderförmigen äußeren Oberflächenabschnitt (28) aufweist.

7. Vorrichtung nach Anspruch 6, **dadurch gekennzeichnet, dass** das dem kegelstumpfförmigen äußeren Oberflächenabschnitt (24) gegenüberliegende, insbesondere den größeren Durchmesser aufweisende, Ende des Referenzelements (18) mit dem Halter (10) verklebt ist.

8. Vorrichtung nach einem der vorhergehenden Ansprüche, **dadurch gekennzeichnet, dass** mehrere Referenzelemente (18) vorgesehen sind, die an mehreren Außenflächen des Trägers (10) angeklebt sind.

9. Vorrichtung nach einem der vorhergehenden Ansprüche, **dadurch gekennzeichnet, dass** zur Verklebung der Referenzelemente (18) mit dem Träger (10) ein Haftvermittler verwendet wird, der einen Längenausdehnungskoeffizienten aufweist, der dem des Trägers (10) und/oder des Referenzelements (18) entspricht.

## Claims

1. A device (8) for monitoring the precision of machine tools and measuring devices, having a holder (10) and at least a plurality of reference elements (18) glued to the surface of the holder (10), the holder (10) having a grid with longitudinal lines (20) and/or widthwise lines (22), **characterized in that** the reference elements (18) are disposed on the holder (10) at different spacings from longitudinal lines (20) and/or widthwise lines (22) **in that** the reference elements (18) disposed in the longitudinal line (20) and in the widthwise line (22) are not located exactly on these lines (20, 22) but instead have a certain offset from them, and the reference elements (18) each have an inner upper surface (24) which is circular-cylindrical or has a polygonal cross section.

2. The device of claim 1, **characterized in that** the holder (10) is embodied as a rectangular plate or cube.

3. The device of one of the foregoing claims, **characterized in that** the holder (10) comprises stone, in particular granite.

4. The device of one of the foregoing claims, **characterized in that** the reference element (18) comprises metal, in particular titanium or a tinanium alloy.

5. The device of one of the foregoing claims, **characterized in that** the reference element (18) is embodied as a tube, sphere, cube, or hemisphere.

6. The device of one of the foregoing claims, **characterized in that** the reference element (18) has a frustoconical outer surface portion (26) and/or a circular-cylindrical outer surface portion (28).

7. The device of one of the foregoing claims, **characterized in that** the end of the reference element (18) opposite the frustoconical outer surface portion (24), in particular the end having the greater diameter, is glued to the holder (10).

8. The device of one of the foregoing claims, **characterized in that** a plurality of reference elements (18) are provided, which are glued to a plurality of outer surfaces of the holder (10).

9. The device of one of the foregoing claims, **characterized in that** for gluing the reference elements (18) to the holder (10), an adhesion promoter is used which has a coefficient of longitudinal expansion matching that of the holder (10) and/or of the reference element (18).

## Revendications

1. Dispositif (8) permettant de vérifier la précision de machines-outils et de dispositifs de mesure, comprenant un support (10) et au moins plusieurs éléments de référence (18) collés sur la surface du support (10), le support (10) présentant un quadrillage comportant des lignes de longueur (20) et des lignes de largeur (22), **caractérisé en ce que** les éléments de référence (18) sont disposés à des distances différentes par rapport aux lignes de longueur (20) et/ou aux lignes de largeur (22) sur le support (10), par le fait que les éléments de référence (18) disposés dans la ligne de longueur (20) et dans la ligne de largeur (22) ne se situent pas exactement sur ces lignes (20, 22), mais sont légèrement décalés de celles-ci, et les éléments de référence (18) présentent respectivement une surface intérieure (24) en forme de cylindre circulaire ou présentant une section transversale polygonale.

2. Dispositif selon la revendication 1, **caractérisé en ce que** le support (10) est conçu comme une plaque rectangulaire ou comme un dé.

3. Dispositif selon l'une quelconque des revendications précédentes, **caractérisé en ce que** le support (10) est fabriqué en pierre, en particulier en granit.

4. Dispositif selon l'une quelconque des revendications précédentes, **caractérisé en ce que** l'élément de référence (18) est constitué de métal, en particulier de titane ou d'un alliage de titane.

5. Dispositif selon l'une quelconque des revendications précédentes, **caractérisé en ce que** l'élément de référence (18) est conçu comme un tube, une sphère, un dé ou comme un hémisphère.

6. Dispositif selon l'une quelconque des revendications précédentes, **caractérisé en ce que** l'élément de référence (18) présente une partie de surface extérieure tronconique (26) et/ou une partie de surface extérieure en forme de cylindre circulaire (28).

7. Dispositif selon la revendication 6, **caractérisé en ce que** l'extrémité de l'élément de référence (18) opposée à la partie de surface extérieure tronconique (24), ladite extrémité présentant en particulier le diamètre le plus grand, est collée au support (10).

8. Dispositif selon l'une quelconque des revendications précédentes, **caractérisé en ce que** plusieurs éléments de référence (18) sont collés sur plusieurs surfaces extérieures du support (10).

9. Dispositif selon l'une quelconque des revendications précédentes, **caractérisé en ce qu'**un promoteur d'adhérence présentant un coefficient de dilatation linéique correspondant à celui du support (10) et/ou de l'élément de référence (18) est utilisé pour coller les éléments de référence (18) au support (10).
